# EUROPÄISCHE PATENTSCHRIFT

(11) **EP 3 067 681 B1**
(45) Veröffentlichungstag und Bekanntmachung des Hinweises auf die Patenterteilung: **14.02.2018**
(21) Anmeldenummer: 15158414.1
(22) Anmeldetag: 10.03.2015
(51) Int. Cl.: G01M 15/02, G01M 15/04

(54) **VERFAHREN ZUM BETREIBEN EINES MOTOREN- ODER ANTRIEBSSTRANGPRÜFSTANDS**
METHOD FOR OPERATING AN ENGINE OR POWER TRAIN TEST STAND
PROCÉDÉ DE FONCTIONNEMENT D'UN BANC D'ESSAI DE GROUPES MOTOPROPULSEURS OU DE MOTEURS

(43) Veröffentlichungstag der Anmeldung: 14.09.2016
(73) Patentinhaber: IPG Automotive GmbH, 76185 Karlsruhe (DE)
(72) Erfinder: Disch, Christian Dipl.-Ing., 79215 Biederbach (DE); Schyr, Christian Dr.-Ing., 69120 Heidelberg (DE); Donn, Christian Dr.-Ing., 76135 Karlsruhe (DE); Koch, Thomas Prof. Dr. sc. techn., 76327 Pfinztal (DE)
(74) Vertreter: Durm Patentanwälte PartG mbB

(56) Entgegenhaltungen:
- EP-A2- 1 365 129
- EP-A2- 2 264 421
- WO-A1-2011/022746

## Beschreibung

Die Erfindung betrifft ein Verfahren zum Betreiben eines Motoren- oder Antriebsstrangprüfstands mit einem Verbrennungsmotor. Der Motor weist mindestens einen Brennraum und eine Kurbelwelle auf, an der ein effektives Motormoment abgegeben wird. Der Motoren- oder Antriebsstrangprüfstand umfasst weiter eine Antriebs- und/oder Belastungseinrichtung, die direkt oder über den Antriebsstrang mit der Kurbelwelle verbunden ist. Mittels der Antriebs- und/oder Belastungseinrichtung können dynamische Belastungen simuliert werden, die beim realen Betrieb eines Fahrzeugs über die Kurbelwelle auf den Verbrennungsmotor wirken.
Derartige Verfahren werden bei der Entwicklung von Fahrzeugen und deren Komponenten, insbesondere bei der Antriebsstrangentwicklung, angewandt. Unter Verwendung des abgegebenen effektiven Motormoments berechnet ein Simulationsrechner Lastmomente, die während des realen Betriebs eines Fahrzeugs auf den Verbrennungsmotor und/oder den Antriebsstrang wirken. Derartige Lastmomente ergeben sich unter anderem durch Massenträgheiten einzelner Fahrzeugkomponenten, Fahrwiderstände und Reibwerte. Die Antriebs- und/oder Belastungseinrichtungen werden dann derart geregelt, dass die berechneten Lastmomente direkt oder über Antriebsstrangkomponenten auf den Verbrennungsmotor wirken. Optional kann auf dem Simulationsrechner ein Modell eines virtuellen Fahrers hinterlegt sein, mittels dem die Pedalwertvorgabe für den Verbrennungsmotor berechnet und vorgegeben und damit das effektive Motormoment geregelt wird.
In bekannten Verfahren wird das effektive Motormoment an einer Welle, die den Verbrennungsmotor mit der Antriebs- und/oder Belastungseinrichtung verbindet, messtechnisch erfasst. Kommen beispielsweise an einem Antriebsstrangprüfstand mehrere Antriebs- und/oder Belastungseinrichtungen zum Einsatz, so werden die Momente jeweils an der mit der jeweiligen Antriebs- und/oder Belastungseinrichtung verbundenen Welle messtechnisch erfasst. Die gemessenen Momente sind jedoch von prüfstandsspezifischen Eigenfrequenzen überlagert, resultierend aus Dämpfungselementen, den Wellensteifigkeiten sowie den tatsächlichen Drehmassen am Prüfstand, die in der Regel nicht denen des realen Fahrzeugaufbaus entsprechen. Eine exakte und daraus resultierend stabile Regelung der Antriebs- und/oder Belastungseinrichtung ist daher im dynamischen Betrieb nur schwer oder gar nicht möglich, jedenfalls nur mit begrenzter Dynamik.
Angesichts der beschriebenen Problematik ist es Aufgabe der vorliegenden Erfindung, ein verbessertes Verfahren zum Betreiben eines Motoren- oder Antriebsstrangprüfstands und eine entsprechende Prüfstandsanordnung bereitzustellen, die eine exakte und hochdynamische Regelung der Antriebs- und/oder Belastungseinrichtung mit geringstmöglicher Latenzzeit ermöglicht.
Gelöst wird die Aufgabe durch ein Verfahren mit den Merkmalen des Anspruchs 1 und durch eine Prüfstandsanordnung mit den Merkmalen des Anspruchs 9.
Im Rahmen der vorliegenden Erfindung wird der Drehwinkel der Kurbelwelle als Kurbelwinkel bezeichnet. Unter dem Begriff Indizierung wird die gleichzeitige Messung des Brennraumdrucks und des Kurbelwinkels sowie deren Zuordnung verstanden.
Erfindungsgemäß werden der gemessene Brennraumdruck, der entsprechende Kurbelwinkel und die Motordrehzahl zur weiteren Verarbeitung an ein Echtzeitsystem übermittelt, das das indizierte Motormoment und das effektive Motormoment berechnet. Dazu werden in einem ersten Verfahrensschritt ein Brennraumdruck in einem oder mehreren Brennräumen des Verbrennungsmotors und ein Kurbelwinkel an der Kurbelwelle zeitgleich erfasst. Das Messen des Brennraumdrucks erfolgt bevorzugt mittels Drucksensoren, die im Bereich eines oder mehrerer Zylinder des Verbrennungsmotors angeordnet sind. Es können sämtliche Drucksensoren verwendet werden, die für eine Zylinderdruckindizierung geeignet sind. Insbesondere sind solche Drucksensoren geeignet, die dynamische Druckverläufe messen können. Bevorzugt liegt die Messungenauigkeit der verwendeten Drucksensoren bezüglich des zu ermittelnden indizierten Mitteldruckes in einem Bereich von maximal 1 bis 3 %.
Die Sensierung des Kurbelwinkels an der Kurbelwelle erfolgt mit bekannten Messverfahren. Beispielweise kann hierzu ein Kurbelwinkelsensor verwendet werden.
In einem weiteren Verfahrensschritt wird eine Motordrehzahl ermittelt. Optional wird die Motordrehzahl mittels eines Drehzahlsensors gemessen oder basierend auf dem zeitlichen Verlauf der erfassten Kurbelwinkel berechnet. Bevorzugt erfolgt die Erfassung des Brennraumdrucks, des Kurbelwinkels und der Motordrehzahl zeitsynchron.
In einem weiteren Verfahrensschritt erfolgt die Berechnung des kurbelwinkelgenauen indizierten Motormoments unter Verwendung des gemessenen Brennraumdrucks und des Kurbelwinkels. Im Rahmen der vorliegenden Erfindung wird unter dem Begriff indiziertes Motormoment ein Moment verstanden, das unter Berücksichtigung der Verluste durch Verbrennung/Gemischbildung eines Luft-Kraftstoff-Gemischs im Brennraum erzeugt wird und theoretisch an der Kurbelwelle anliegt. Reibungsverluste im Kurbeltrieb und in der Kolbengruppe werden bei der Ermittlung des indizierten Moments nicht berücksichtigt. Die Berechnung des indizierten Motormoments erfolgt in Abhängigkeit des gemessenen Brennraumdrucks und in Abhängigkeit der geometrischen Parameter des Kurbeltriebes. Die Begriffe indiziertes Motormoment und inneres Motormoment werden synonym für einander verwendet.
Im Rahmen der vorliegenden Erfindung wird weiter eine kurbelwinkelgenaue Größe, beispielsweise ein kurbelwinkelgenaues Motormoment, als eine Größe definiert, die von dem Kurbelwinkel abhängig ist. Die Auflösung des Kurbelwinkels ist dabei derart gewählt, dass die Größe in Abhängigkeit des Kurbelwinkels sehr genau, bevorzugt winkelgenau aufgelöst ist. Die Auflösung des Kurbelwinkels erfolgt bevorzugt in Grad-Schritten, besonders bevorzugt in zehntel Grad-Schritten.
In einem weiteren Verfahrensschritt wird das kurbelwinkelgenaue effektive Motormoment basierend auf dem ermittelten indizierten Motormoment berechnet. Im effektiven Motormoment sind im Gegensatz zum indizierten Motormoment Verlustmomente enthalten, welche neben Reibungsverlusten, z. B. an den Kolben und dem Kurbeltrieb des Verbrennungsmotors, auch Antriebsmomente aller am Ketten- oder Riementrieb angeschlossenen Verbraucher umfassen. Solche Verbraucher bzw. Nebenaggregate können beispielsweise ein Klimakompressor, eine Wasserpumpe, eine Kraftstoffpumpe oder ein mechanischer Lader sein. Das effektive Motormoment ist folglich geringer als das indizierte Motormoment. Optional erfolgt die Berechnung des effektiven Motormoments unter Verwendung eines Reibmodells zur Berücksichtigung der Motorreibung sowie der Leistungsaufnahme der Nebenaggregate. Beispielsweise kann es sich bei dem verwendeten Reibmodell um ein physikalisches oder ein empirisches Reibmodell handeln.
Optional können auch virtuelle Verbraucher bei der Berechnung des effektiven Drehmoments berücksichtigt werden. Die zusätzlich eingebrachten Reibmomente können beispielsweise zeitgleich experimentell aus anderen Prüfstandsaufbauten ermittelt werden oder durch Kennfelder oder Modelle bereits in der Simulation hinterlegt sein. Auf diese Weise kann mit Hilfe der Erfindung beispielsweise auch die zusätzlich aufzubringende Leistung zum Betrieb weiterer nicht mit dem Kurbeltrieb verbundener Nebenaggregate in der Berechnung des zur Verfügung stehenden effektiven Momentes an entsprechender Stelle in der auf dem Echtzeitrechner laufenden Modellumgebung berücksichtigt werden.

In einem weiteren Verfahrensschritt wird die Antriebs- und/oder Belastungseinrichtung in Abhängigkeit des zuvor berechneten effektiven Motormoments und der ermittelten Motordrehzahl geregelt.
Im Rahmen der vorliegenden Erfindung wird unter dem Begriff Antriebs- und/oder Belastungseinrichtung eine Einrichtung verstanden, die direkt oder über Antriebsstrangkomponenten mit der Kurbelwelle verbunden werden kann. Mithilfe der Antriebs- und/oder Belastungseinrichtung ist es möglich, die Kurbelwelle anzutreiben oder abzubremsen. Ein Antreiben der Kurbelwelle ist beispielsweise nötig, um einen im Fahrzeug stattfindenden Schubbetrieb des Verbrennungsmotors zu simulieren. Das Bremsen der Kurbelwelle wird verwendet, um die Kurbelwelle mit Lastmomenten, die beispielsweise aus Fahrwiderständen resultieren, zu beaufschlagen.
Die oben genannten Verfahrensschritte, nämlich Erfassen eines Brennraumdrucks und eines Kurbelwinkels, Berechnen des indizierten Motormoments und Berechnen des effektiven Motormoments, erfolgen sobald die dafür notwendigen Daten zur Verfügung stehen, bevorzugt in aufeinanderfolgenden Berechnungszyklen, besonders bevorzugt in demselben Zyklus. Besonders bevorzugt erfolgt die Erfassung der Messdaten (Brennraumdruck, Kurbelwinkel und Motordrehzahl) und die Berechnung des indizierten und effektiven Motormoments jeweils zeitsynchron.
Indem zur Berechnung der indizierten und effektiven Motormomente die Brennraumdrücke und der Kurbelwinkel verwendet werden, liegt das effektive Motormoment im Vergleich zu bekannten Verfahren aus dem Stand der Technik, insbesondere im Vergleich zur Messung des effektiven Motormoments mithilfe eines Drehmomentmessflansches, schneller vor. Schneller bedeutet in diesem Zusammenhang mehrere, mindestens jedoch einen Verarbeitungszyklus von höchstens 1ms früher. Dadurch kann eine stabile dynamische Regelung der Antriebs- und/oder Belastungseinrichtung erfolgen. Ein Aufschwingen der Regelsignale, beispielsweise durch zeitlich verzögert vorliegende IstWerte der zu regelnden Größe und damit einhergehende ungenaue Sollwertberechnungen und Regeleingriffe, wird so verhindert. Das auf die beschriebene Weise berechnete effektive Moment ist nicht von prüfstandspezifischen Eigenfrequenzen überlagert und liegt mit geringstmöglichem Zeitversatz vor, so dass sich im Gegensatz zur Messung des effektiven Motormoments die in der Regel mit einer Filterung bzw. mit einem gleitenden Mittelwert angewendet werden muss, eine dynamisch stabile Regelung einer Antriebs- und/oder Belastungseinrichtung realisiert werden kann.
Es ist denkbar, die Messdaten (Brennraumdruck, Kurbelwinkel und Motordrehzahl) und die berechneten Daten, beispielsweise das indizierte und effektive Motormoment, zu visualisieren und/oder auf einem geeigneten Speicher zeitsynchron abzuspeichern.
Im Rahmen der vorliegenden Erfindung werden unter dem Begriff Antriebsstrang (powertrain) sowohl sämtliche Antriebsmaschinen (prime-mover), beispielsweise ein Verbrennungsmotor und ggfs. eine E-Maschine, sowie alle weiteren Komponenten (Antriebsstrangkomponenten) verstanden, die zwischen dem Verbrennungsmotor und der Antriebs- und/oder Belastungseinrichtung angeordnet sind (drivetrain), wie beispielsweise Antriebswellen, Getriebe, Differenziale etc..
Es versteht sich, dass der Motoren- oder Antriebsstrangprüfstand mehrere Motoren mit jeweils mehreren Brennräumen umfassen kann. Ebenso ist es möglich, dass der Motoren- oder Antriebsstrangprüfstand mehrere Antriebsmaschinen (prime-mover) und mehrere Antriebs- und/oder Belastungseinrichtungen umfasst.

Vorzugsweise wird die Antriebs- und/oder Belastungseinrichtung in Echtzeit geregelt. Im Rahmen der vorliegenden Erfindung bedeutet der Begriff Echtzeit, dass die simulierte Zeit exakt der realen Zeit entspricht. Zudem wird der Begriff Echtzeit für die Charakterisierung des Betriebs informationstechnischer Systeme (Echtzeitsysteme) genutzt, die bestimmte Ergebnisse garantiert innerhalb einer vorbestimmten Zeitspanne, zum Beispiel in einem festen Zeitraster, liefern können. Der Begriff Echtzeit sagt damit etwas über die Fähigkeit eines Systems aus, auf ein Ereignis innerhalb einer vorgegebenen Zeitspanne zu reagieren. Somit bedeutet der Begriff Echtzeitregelung im Rahmen der vorliegenden Erfindung, dass Istwerte der Regelgröße mit einer geringen zeitlichen Verzögerung von ≤ 10ms, bevorzugt von ≤ 1ms und besonders bevorzugt von ≤ 0,1ms sowie innerhalb einer fest vorgegebenen Zeitspanne vorliegen, so dass die Sollwertberechnung im gleichen Berechnungszyklus erfolgen kann und damit eine stabile Regelung im dynamischen Betrieb ermöglicht wird. Der gemessene Brennraumdruck, der entsprechende Kurbelwinkel und die Motordrehzahl zur weiteren Verarbeitung werden an ein Echtzeitsystem übermittelt. Bevorzugt ist das Echtzeitsystem direkt mit den Sensoren am Verbrennungsmotor verbunden. Die Indiziersignale, also die Datensignale des gemessenen Brennraumdrucks und des Kurbelwinkels sowie die Motordrehzahl bilden die Eingangsgrößen für das Echtzeitsystem. Optional werden die an den Antriebs- und/der Belastungseinrichtung anliegenden Lastmomente sowie die Drehzahlen der Antriebs- und/der Belastungseinrichtung mit geeigneten Messverfahren gemessen. Es ist ebenfalls denkbar, zusätzlich das effektive Motormoment an einer Welle, die den Verbrennungsmotor mit der Antriebs- und/oder Belastungseinrichtung verbindet, messtechnisch zu erfassen. Die Lastmomente, das gemessene effektive Motormoment und die Drehzahlen der Antriebs- und/oder Belastungseinrichtung bilden ebenfalls Eingangsgrößen für das Echtzeitsystem. Das indizierte Motormoment und das effektive Motormoment werden vom Echtzeitsystem berechnet. Beispielsweise weist das Echtzeitsystem einen Echtzeitrechner auf, der die Signale der einzelnen Sensoren verarbeitet und die gewünschten Größen berechnet. Optional kann das Echtzeitsystem Speicher aufweisen, auf denen die Daten der Sensoren sowie weitere vom Echtzeitrechner berechnete Daten gespeichert werden.
Ein weiteres optionales Element der Erfindung ist, dass von dem Echtzeitsystem ein Sollwert zur Regelung der Antriebs- und/oder Belastungseinrichtung basierend auf dem effektiven Motormoment unter Verwendung eines virtuellen Fahrzeugmodells, einer virtuellen Strecke, auf der das Fahrzeugmodell virtuell fährt, und einem virtuellen Fahrermodell berechnet wird. Beispielsweise umfasst das Echtzeitsystem ein virtuelles Fahrzeugmodell, in dem einzelne Komponenten des Fahrzeugs und deren Massenträgheiten virtuell enthalten sind.
Es ist denkbar, dass das virtuelle Fahrzeugmodell virtuelle elektrische und mechanische Komponenten im Antriebsstrang enthält, so dass verschiedene konventionelle und Hybridantriebsstrangkonfigurationen virtuell am Motoren- oder Antriebsstrangprüfstand getestet werden können. Solche Komponenten können beispielweise Elektromotoren bzw. Generatoren und/oder Batterien oder Getriebe sein. Dadurch werden ein schnelles Testen und eine darauf aufbauende effiziente Optimierung von unterschiedlichen Antriebskonzepten und -konfigurationen ermöglicht.
Weiter kann das Echtzeitsystem eine Modellumgebung samt virtueller Strecke umfassen, auf der das Fahrzeugmodell fährt. Diese virtuelle Strecke ist frei konfigurierbar. Sie kann bekannten Strecken nachempfunden werden oder aus einzelnen für eine Fahrzeugsimulation charakteristischen Elementen bzw. Abschnitten bestehen. Solche charakteristischen Elemente können beispielsweise die Streckensteigung oder der Kurvenverlauf der Strecke sein.
Optional enthält die Modellumgebung ein virtuelles Fahrermodell, mit dem das Verhalten eines Fahrers beim Befahren der virtuellen Strecke simuliert wird. Größen, die beispielsweise durch das Fahrermodell als Reaktion auf die zu befahrende Strecke ausgegeben werden können, sind eine gewünschte Gaspedalstellung oder ein Lenkwinkel am Lenkrad sowie die Gangwahl. Optional kann mithilfe des Fahrermodells die Gaspedalstellung des zu untersuchenden Verbrennungsmotors und damit sowohl das indizierte als auch das effektive Motormoment des Verbrennungsmotors beeinflusst werden. Hierzu wird der durch das Fahrermodell vorgegebene Pedalwert (die Gaspedalstellung) an das reale oder virtuelle Motorsteuergerät des Verbrennungsmotors übergeben. Die Modellumgebung ist Teil des Echtzeitsystems und wird auf dem Echtzeitrechner ausgeführt.
Das vom Echtzeitrechner berechnete effektive Motormoment bildet eine Eingangsgröße für die oben genannten Simulationsmodelle. Mithilfe der Modelle werden die dynamischen Belastungen des Verbrennungsmotors und/oder des Antriebsstrangs (Prüfling) berechnet. Diese Belastungen werden als Sollwerte zur Regelung der Antriebs- und/oder Belastungseinrichtung verwendet. Der Sollwert stellt die Führungsgröße eines Regelkreises zur Regelung der Antriebs- und/oder Belastungseinrichtung dar. Er gibt die Belastung vor, die durch die Antriebs- und/oder Belastungseinrichtung auf den Antriebsstrang bzw. den Verbrennungsmotor wirken soll.
Es ist denkbar, dass das Echtzeitsystem mit weiteren realen Steuergeräten verbunden ist und/oder zusätzlich virtuelle Steuergeräte, beispielsweise Fahrzeugsteuergeräte (z.B. ESP-Steuergeräte) oder Getriebesteuergeräte, umfasst. Dies ermöglicht einen Betrieb bzw. die Simulation der Steuergeräte zusammen mit dem virtuellen Fahrzeug und dem Antriebsstrang. Das Ändern einzelner Parameter der Steuergeräte ist schnell und einfach möglich, wodurch eine effiziente Optimierung der Steuergeräte erfolgen kann. Bevorzugt entfällt das reale Motorsteuergerät bei einem auf dem Echtzeitrechner hinterlegten virtuellen Motorsteuergerät. Die Steuerbefehle des virtuellen Motorsteuergeräts werden dann an den Verbrennungsmotor geleitet. Hierzu ist das virtuelle Motorsteuergerät über das Echtzeitsystem mit dem Verbrennungsmotor verbunden. Es ist aber auch denkbar, dass nur einzelne Funktionen des realen Motorsteuergeräts auf das virtuelle Motorsteuergerät ausgelagert werden. In diesem Fall entfällt das reale Motorsteuergerät nicht. Es ist ebenfalls denkbar, das Echtzeitsystem derart zu konfigurieren, dass zwischen realen und virtuellen Motorsteuergeräten hin- und her- geschaltet werden kann.
Optional werden das indizierte Motormoment, das effektive Motormoment und der Sollwert von einem einzigen Prozessor berechnet, der bevorzugt Teil des Echtzeitsystems ist. Beispielsweise umfasst der Echtzeitrechner den Prozessor. Durch die Berechnung der Motormomente und des Sollwerts mittels eines einzigen Prozessors weisen die genannten Größen denselben Zeitstempel auf. Sie sind also zeitsynchron, d.h. die zeitliche Differenz der einzelnen Größen beträgt ≤ 1 ms, bevorzugt ≤ 0,1 ms. Dies ermöglicht eine genauere Regelung der Antriebs- und/oder Belastungseinrichtung. Insbesondere wird die Stabilität der Regelung erhöht. Überschwinger der Sensorantwort, wie im Stand der Technik üblich, werden vermieden. Es ist denkbar, dass schon die Messwerte (Brennraumdruck, Kurbelwinkel, Motordrehzahl, Lastmoment und Drehzahl der Antriebs- und/oder Belastungseinrichtung) zeitsynchron erfasst werden. Durch die zeitsynchrone Erfassung der Messwerte, der zeitsynchronen Berechnung der indizierten und effektiven Momente sowie der zeitsynchronen Berechnung aller weiteren fahrzeug-, fahrer- und umfeldrelevanten Größen in der Modellumgebung und die zeitsynchrone Regelung der Antriebs- und/oder Belastungseinrichtung wird die Latenzzeit des Regelsystems möglichst gering gehalten, bevorzugt kleiner 1 ms, besonders bevorzugt kleiner 0,1 ms.
Bevorzugt weist das Echtzeitsystem eine Taktung von mindestens 1 kHz, bevorzugt von 10 kHz auf. Je nach Anwendungsfall kann die Taktung des Echtzeitsystems auf bis zu 100 kHz, besonders bevorzugt auf bis zu 200 kHz, weiter besonders bevorzugt auf 100 bis 200 kHz gesteigert werden, d.h. für den praktischen Anwendungsfall tritt keine in der Praxis relevante und das Messergebnis verändernde Zeitverzögerung auf. Mithilfe des Echtzeitsystems können Messwerte, berechnete Größen und alle weiteren bei der Regelung der Antriebs- und/oder Belastungseinrichtung anfallenden Werte mit einer Taktung von mindestens 1 kHz 100% zeitsynchron aufgezeichnet werden. Die Berechnung der indizierten und effektiven Motormomente kann je nach Motordrehzahl mit einer Taktung von 10-50 kHz kurbelwinkelgenau und zeitsynchron erfolgen.
Besonders bevorzugt wird die Antriebs- und/oder Belastungseinrichtung basierend auf dem Sollwert vom Echtzeitsystem geregelt. Optional ist das Echtzeitsystem direkt mit der Antriebs- und/oder Belastungseinrichtung verbunden. Um den Ist-Zustand der Antriebs- und/oder Belastungsmaschine zu erfassen, wird die Drehzahl und/oder das Lastmoment der Antriebs und/oder Belastungseinrichtung mittels geeigneter Sensoren gemessen. Beispielsweise wird der Strom erfasst, mit dem die Antriebs- und/oder Belastungsmaschine betrieben wird, und so auf das Lastmoment geschlossen. Bevorzugt sind ein Drehzahl- und/oder ein Drehmomentsensor an der Antriebs- und/oder Belastungseinrichtung angebracht, der die Drehzahl und das anliegende Drehmoment derselben erfassen. Die Messdaten der Sensoren werden an das Echtzeitsystem übermittelt und stehen zur Regelung der Antriebs- und/oder Belastungseinrichtung zur Verfügung.
Es ist zweckmäßig, dass das Echtzeitsystem Teil eines Prüfstandsregelsystems zur Regelung der Antriebs- und/oder Belastungseinrichtung ist. Die in dem Regelkreis zur Regelung der Antriebs- und/oder Belastungseinrichtung enthaltenen Regelelemente sind Teil des Echtzeitsystems.
Bei einer weiter bevorzugten Ausführungsform wird der Sollwert zur Regelung der Antriebs- und/oder Belastungseinrichtung vom Echtzeitsystem an das Prüfstandsregelsystem übergeben, das die Antriebs- und/oder Belastungseinrichtung regelt. Optional ist das Echtzeitsystem über eine schnelle Datenleitung (mit hoher Datenrate) mit dem Prüfstandsregelsystem verbunden. Eine hohe Datenrate bedeutet in diesem Zusammenhang, dass die Daten mit Zykluszeiten von ≤ 100 µs bei niedrigem Jitter für eine exakte Synchronisierung (≤ 1 µs) übermittelt werden. Dadurch ist eine schnelle Prüfstandsregelung möglich.
Bevorzugt arbeiten das Echtzeitsystem und das Prüfstandsregelsystem zeitsynchron. Sämtliche Messwerte, berechnete Größen und Regelgrößen weisen denselben Zeitstempel auf. Die in dem Regelkreis zur Regelung der Antriebs- und/oder Belastungseinrichtung enthaltenen Regelelemente sind Teil des Prüfstandsregelsystems. Das Echtzeitsystem kann beispielsweise zur Nachrüstung eines bestehenden Motoren- oder Antriebsstrangprüfstands mit einem bestehenden Prüfstandsregelsystem verwendet werden.
Optional ist der Sollwert zur Regelung der Antriebs- und/oder Belastungseinrichtung eine Drehzahl oder ein Lastmoment. Dadurch können unterschiedliche Regelungsstrategien verwirklicht werden. Beispielsweise kann die Antriebs- und/oder Belastungseinrichtung drehmomentabhängig oder drehzahlabhängig geregelt werden. Bei einer drehmomentabhängigen Regelung wird der Antriebs- und/oder Belastungseinrichtung ein Drehmoment vorgegeben. Wird die Antriebs- und/oder Belastungseinrichtung hingegen drehzahlabhängig geregelt, so wird ihr eine Drehzahl vorgeben. Es versteht sich, dass das Echtzeitsystem derart konfigurierbar ist, so dass es wahlweise eine Drehzahl oder ein Lastmoment als Sollwert ausgibt.
Teil der vorliegenden Erfindung ist auch eine Prüfstandsanordnung für dynamische Prüfaufgaben an einem Verbrennungsmotor und/oder einem Antriebsstrang umfassend einen Verbrennungsmotor mit mindestens einem Brennraum und einer Kurbelwelle, Drucksensoren zum Messen von Brennraumdrücken und einen Winkelsensor zum Messen von Kurbelwinkeln an der Kurbelwelle. Die Prüfstandsanordnung umfasst weiter eine Antriebs- und/oder Belastungseinrichtung, die direkt oder über den Antriebsstrang mit der Kurbelwelle des Verbrennungsmotors verbunden ist und mittels der dynamische Belastungen, die beim realen Betrieb eines Fahrzeugs über die Kurbelwelle auf den Verbrennungsmotor wirken, simuliert werden können. Ebenfalls Teil der Prüfstandsanordnung ist ein Echtzeitsystem zur Verarbeitung von Messdaten der Sensoren.

Erfindungsgemäß umfasst das Echtzeitsystem einen Echtzeitrechner, der ausgebildet ist, basierend auf den gemessenen Brennraumdrücken und Kurbelwinkeln ein effektives Motormoment zu berechnen, das der Verbrennungsmotor an seiner Kurbelwelle abgibt. Der Echtzeitrechner ist weiter ausgebildet, in Abhängigkeit des berechneten effektiven Moments einen Sollwert zu berechnen, der zur Regelung der Antriebs- und/oder Belastungseinrichtung verwendet wird.

Mithilfe der erfindungsgemäßen Prüfstandsanordnung ist es möglich, das indizierte sowie das effektive Moment des Verbrennungsmotors basierend auf den Brennraumdrücken und Kurbelwinkeln zu berechnen und zur weiteren Verarbeitung an den Echtzeitrechner weiterzugeben. Dieser generiert einen Sollwert zur Regelung der Antriebs- und/oder Belastungseinrichtung, so dass eine Echtzeitregelung der Antriebs- und oder Belastungseinrichtung ermöglicht wird.
Optional weist die Prüfstandsanordnung mindestens einen Drehzahlsensor auf, mittels dem die Drehzahl der Kurbelwelle und damit die Motordrehzahl des Verbrennungsmotors erfasst werden kann. Alternativ kann beispielsweise die Drehzahl der Kurbelwelle mithilfe der ermittelten Kurbelwinkel, also der Drehwinkel, berechnet werden.
Bevorzugt ist auf dem Echtzeitrechner ein virtuelles Fahrzeugmodell, ein Modell einer virtuellen Strecke, auf der das Fahrzeug virtuell fährt, und ein Modell eines virtuellen Fahrers hinterlegt. Der Echtzeitrechner ist ausgebildet, unter Verwendung des berechneten effektiven Motormoments und am Verbrennungsmotor gemessener Motordrehzahlen sowie mithilfe der Modelle den Sollwert zur Regelung der Antriebs- und/oder Belastungseinrichtung zu berechnen.
Das Echtzeitsystem ist zur Erfassung der Messdaten mit den Sensoren verbunden. Basierend auf dem berechneten effektiven Motormoment, d. h. also für den aktuellen Betriebspunkt des Motors, werden die Belastungen berechnet, die sich durch Trägheiten von Fahrzeugbauteilen (Fahrzeugmodell) und durch den Verlauf der Strecke, beispielsweise der Steigung (virtuelle Strecke) am Verbindungspunkt zwischen Verbrennungsmotor bzw. Antriebsstrang und der Antriebs- und/oder Belastungseinrichtung ergeben.
Optional ist ein virtuelles Fahrermodell in die auf dem Echtzeitrechner ausgeführte Modellumgebung integriert, so dass mit diesem die Gaspedalstellung des Verbrennungsmotors vorgegeben werden kann. Dadurch kann der Verbrennungsmotor mithilfe des virtuellen Fahrermodells in unterschiedlichen Betriebszuständen betrieben werden. Durch Änderung der Betriebszustände ergeben sich unterschiedliche Belastungen auf den Verbrennungsmotor bzw. den Antriebsstrang. Somit können auch dynamische Belastungen, wie sie im alltäglichen Betrieb eines Fahrzeugs auftreten, simuliert werden.
Es ist denkbar, die virtuellen Fahrzeugmodelle mit virtuellen elektrischen und mechanischen Komponenten im Antriebsstrang zu ergänzen, so dass verschiedene konventionelle und Hybridantriebsstrangkonfigurationen virtuell am Motoren- oder Antriebsstrangprüfstand getestet und optimiert werden können.
Es ist weiter denkbar, dass auf dem Echtzeitrechner virtuelle Steuergeräte wie beispielsweise Motor-, Fahrzeug- oder Antriebsstrangsteuergeräte hinterlegt bzw. reale Steuergeräte mit dem Echtzeitrechner verbunden sind. Diese bzw. deren Bedatungen können dann durch Variation der einzelnen Parameter optimiert werden. Beispielsweise kann das berechnete indizierte Moment als Eingangsgröße für ein virtuelles Motorsteuergerät (Engine Control Unit, ECU) verwendet werden. Das berechnete und todzeitfrei zur Verfügung stehende effektive Moment kann als Eingangsgröße für Fahrzeugsteuergeräte (Vehicle Control Unit, VCU) oder Antriebsstrangsteuergeräte (Power Control Unit, PCU) verwendet werden. Durch Integration der Steuergeräte in das Echtzeitsystem wird ein schnelles und effizientes Testen bzw. Optimieren der einzelnen Steuergeräte ermöglicht.

Weiter bevorzugt ist der Echtzeitrechner ausgebildet, die Antriebs- und/oder Belastungseinrichtung unter Verwendung des Sollwerts zu regeln. Die Antriebs- und/oder Belastungseinrichtung bzw. der zugehörige Frequenzumrichter/Leistungselektronik ist unmittelbar mit dem Echtzeitsystem und/oder dem Echtzeitrechner verbunden. Der Sollwert bildet die Führungsgröße eines Regelkreises, der unter anderem die Antriebs- und/oder Belastungseinrichtung umfasst. Er gibt die Belastung vor, die durch die Antriebs- und/oder Belastungseinrichtung auf den Antriebsstrang bzw. den Verbrennungsmotor wirken soll.
In einer weiteren Ausführungsform weist die Prüfstandsanordnung ein Prüfstandsregelsystem zur Regelung der Antriebs- und/oder Belastungseinrichtung auf, das den Echtzeitrechner umfasst. Das Echtzeitsystem ist vollständig in das Prüfstandsregelsystem integriert. Dadurch kann eine besonders schnelle Regelung der Antriebs- und/oder Belastungseinrichtung in Abhängigkeit des vom Motor abgegebenen effektiven Motormoments erfolgen. Sämtliche Regelelemente eines Regelkreises zur Regelung der Antriebs- und/oder Belastungseinrichtung sind Teil des Echtzeitsystems.
In einer weiter bevorzugten Ausführungsform weist die Prüfstandsanordnung ein Prüfstandsregelsystem zur Regelung der Antriebs- und/oder Belastungseinrichtung auf, an das ein externer Echtzeitrechner den berechneten Sollwert zur Regelung übergibt. Die in dem Regelkreis zur Regelung der Antriebs- und/oder Belastungseinrichtung enthaltenen Regelelemente sind Teil des Prüfstandsregelsystems. Bevorzugt ist das Echtzeitsystem über eine schnelle Datenleitung mit dem Prüfstandsregelsystem verbunden. Die Regelung der Antriebs- und/oder Belastungseinrichtung erfolgt dann unabhängig vom Echtzeitsystem. Der Echtzeitrechner stellt lediglich die entsprechenden Sollwerte zur Verfügung. Das Echtzeitsystem kann so an bestehenden Prüfstandsanordnungen nachgerüstet werden. Dadurch können erhebliche Kosten eingespart werden. Bevorzugt werden das Echtzeitsystem und das Prüfstandsregelsystem derart aufeinander abgestimmt, dass sie zeitsynchron arbeiten. Beispielsweise weisen die Messwerte, die berechneten Größen und die Regelgrößen alle denselben Zeitstempel auf.

Besonders bevorzugt sind die Sensoren am Verbrennungsmotor zur Weiterverarbeitung der Messdaten mit dem Echtzeitrechner verbunden. Dadurch wird eine schnelle Übermittlung der Messdaten zum Echtzeitrechner ermöglicht.

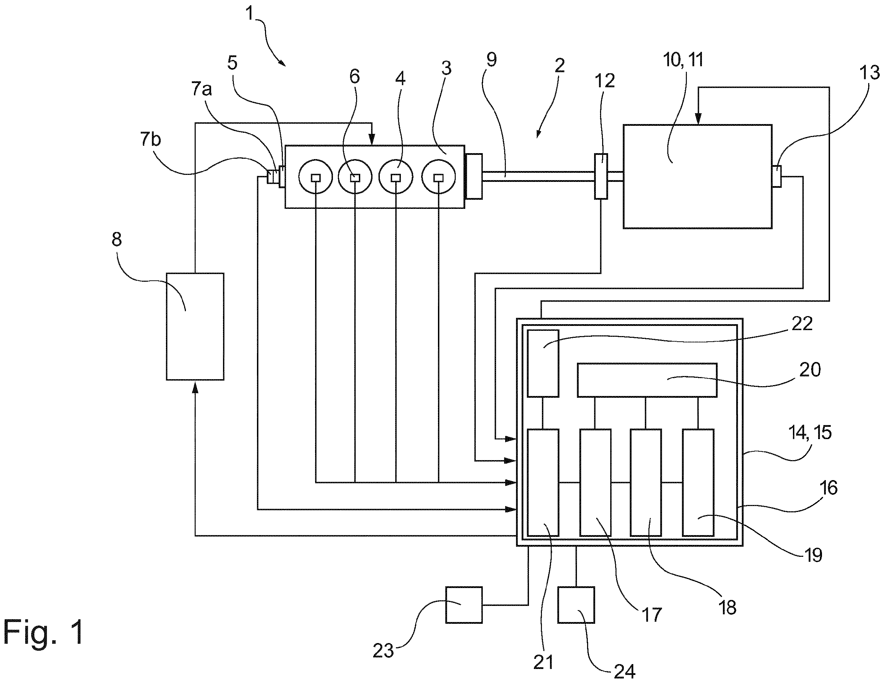

Ein Ausführungsbeispiel der Erfindung wird nachstehend anhand der beigefügten Figur 1 beschrieben, die eine perspektivische Ansicht eines Motorenprüfstands zeigt.
Eine Prüfstandsanordnung 1 mit einem Motorenprüfstand 2 umfasst einen Verbrennungsmotor 3 mit mindestens einem Brennraum 4 und einer Kurbelwelle 5. Im Bereich der Brennräume 4 sind Drucksensoren 6 angeordnet, die Brennraumdrücke während des Betriebs des Motors 3 messen. Die Drucksensoren 6 können beispielsweise im Zylinderkopf angeordnet sein.

Im Bereich der Kurbelwelle 5 sind ein hochauflösender Winkelsensor 7a und ein Drehzahlsensor 7b angeordnet. Der Winkelsensor 7a misst den Kurbelwinkel (Drehwinkel) an der Kurbelwelle 5. Der Drehzahlsensor 7b misst die Drehzahl der Kurbelwelle 5. Optional kann die Drehzahl der Kurbelwelle 5 rechnerisch aus dem Kurbelwinkel abgeleitet werden. Der Drehzahlsensor 7b entfällt in diesem Fall.
Der Verbrennungsmotor 3 weist weiter ein Motorsteuergerät 8 auf, das unter anderem zur Steuerung der Einspritzzeitpunkte, der Einspritzmenge, der Zündzeitpunkte, der Ventilsteuerung usw. dient.
Die Kurbelwelle 5 des Verbrennungsmotors 3 ist über eine Welle 9 mit einer Antriebs- und/oder Belastungseinrichtung 10 verbunden. Die Antriebs- und/oder Belastungseinrichtung 10 ist als Dynamometer 11 (kurz: Dyno), beispielsweise ein Asynchronmotor, ausgebildet. Mittels des Dynos 11 können dynamische Belastungen, die beim realen Betrieb eines Fahrzeugs über die Kurbelwelle 5 auf den Verbrennungsmotor 3 wirken, simuliert werden.

Optional können die dabei in der Welle 9 übertragenen Momente mithilfe eines Drehmomentmessflansches 12 gemessen werden. Ein Drehzahlsensor 13 erfasst die Drehzahlen des Dynos 11.
Der Motorenprüfstand 2 umfasst weiter ein Echtzeitsystem 14 zur Verarbeitung von Messdaten der Sensoren 6, 7a, 7b, 12, 13. Das Echtzeitsystem 14 bildet ein Prüfstandsregelsystem 15 zur Regelung des Dynos 11. Es umfasst einen Echtzeitrechner 16, auf dem ein virtuelles Fahrzeugmodell 17, ein Modell einer virtuellen Strecke 18, auf der das Fahrzeugmodell 17 virtuell fährt, und ein Modell eines virtuellen Fahrers 19 hinterlegt ist. Darüber hinaus ist in dem Echtzeitrechner 16 ein virtuell modelliertes Steuergerät 20, beispielsweise ein Fahrzeug- oder Antriebsstrangsteuergerät, hinterlegt. Die Modelle 17, 18, 19 und das Steuergerät 20 sind jeweils miteinander verbunden, sodass sie Daten untereinander austauschen können.

Im Fahrzeugmodell 17 sind die Massen und Trägheiten von Fahrzeugbauteilen hinterlegt, die mithilfe des Echtzeitsystems 14 simuliert werden. Hierzu zählen sowohl Bauteile des Antriebsstrangs, wie beispielsweise Antriebswellen oder Räder, die nicht real am Prüfstand aufgebaut sind sowie auch weitere Fahrzeugbestandteile, wie beispielsweise das Chassis, das Fahrwerk, und die Karosserie.
Das virtuelle Streckenmodell 18 enthält Daten einer virtuellen Strecke wie beispielsweise Streckensteigung und Streckenverlauf. Im Fahrermodell 19 ist ein virtueller Fahrer hinterlegt, der als Reaktion auf den virtuellen Streckenverlauf bzw. auf eine geforderte Geschwindigkeitsvorgabe Steuerbefehle in Form von Gaspedalstellungen sowie ggf. Gangwechseln und Lenkradeinschlägen vorgibt.
Das Steuergerät 20 ist beispielsweise ein Antriebsstrangsteuergerät und kann bei Verwendung eines Automatikgetriebes die Gangwahl in Abhängigkeit der Motordrehzahl des Verbrennungsmotors 3, der Streckenbeschaffenheit des virtuellen Streckenmodells 18 und der Gaspedalstellung steuern. Hierzu ist das Steuergerät 20 mit dem virtuellen Fahrzeugmodell 17, dem Streckenmodell 18 und dem Fahrermodell 19 virtuell verbunden. Im Echtzeitrechner 16 können auch noch weitere virtuell modellierte Steuergeräte, wie beispielsweise ein virtuell modelliertes ESP-Steuergerät zur virtuellen Steuerung von Bremseingriffen an den virtuellen Rädern hinterlegt sein. Es ist ebenfalls denkbar, dass weitere reale Steuergeräte mit dem Echtzeitrechner 16 verbunden werden.
Optional kann auch das Motorsteuergerät 8 als virtuelles Steuergerät teilweise oder vollständig im Echtzeitrechner 16 enthalten sein. Es versteht sich, dass bei einem auf dem Echtzeitrechner hinterlegten virtuellen Motorsteuergerät das reale Motorsteuergerät 8 entfallen kann.
Zur Verarbeitung der Messdaten der Sensoren 6, 7a, 7b, 12, 13 weist das Echtzeitsystem 14 weiter eine Signalverarbeitung inkl. I/O-Modul 21 auf, die auf dem Echtzeitrechner 16 hinterlegt ist. Sämtliche Sensoren 6, 7a, 7b am Verbrennungsmotor 3, also die Drucksensoren 6, der Winkelsensor 7a und der Drehzahlsensor 7b sind mit dem Echtzeitrechner 16 und der Signalverarbeitung 21 zur Weiterverarbeitung der Messdaten verbunden. Auch alle weiteren Sensoren 12, 13 des Motorprüfstands 2, insbesondere der Drehmomentmessflansch 12 und der Drehzahlsensor 13 sind mit dem Echtzeitrechner 16 und der Signalverarbeitung 21 verbunden. Darüber hinaus weist die Signalverarbeitung 21 Verbindungen zu den Modellen 17, 18, 19 und zu dem Steuergerät 20 auf, sodass Daten ausgetauscht werden können.

Zur Regelung des Verbrennungsmotors weist der Echtzeitrechner 16 eine Verbindung zum Motorsteuergerät 8 auf. Die Regelung des Dynos 11 erfolgt mithilfe einer Dyno-Regelung 22, die auf dem Echtzeitrechner 16 hinterlegt und mit der Signalverarbeitung 21 verbunden ist. Die Dyno-Regelung 22 umfasst sämtliche Regelelemente zur Regelung des Dynos 11. Um die Lastmomente am Dyno 11 einstellen zu können, ist der Echtzeitrechner 16 mit dem Dyno 11 bzw. dem zugehörigen Frequenzumrichter/Leistungselektronik verbunden.

Sowohl die Verbindungen des Echtzeitrechners 16 mit den Sensoren 6, 7a, 7b, 12, 13 als auch die Verbindungen des Echtzeitrechners 16 mit dem Motorsteuergerät 8 und dem Dyno 11 erfolgen über Kabel, die eine hohe Datenübertragungsrate ermöglichen, sodass ein zeitsynchrones Erfassen und Verarbeiten der einzelnen Messwerte möglich ist. Beispielsweise können die Verbindungen mit Zykluszeiten von ≤ 100 µs bei niedrigem Jitter für eine exakte Synchronisierung (≤ 1 µs) hergestellt werden. Neben elektrischen Kabeln können auch Lichtwellenleiter (optische Kabel) verwendet werden.

Das Echtzeitsystem 14 weist eine Anzeige 23 auf, auf der Messdaten der einzelnen Sensoren und darüber hinaus vom Echtzeitrechner berechnete Daten visualisiert werden können. Teil des Echtzeitsystems 14 ist weiter ein Speicher 24, auf dem Messdaten und/oder vom Echtzeitrechner 16 berechnete Daten wenigstens für einen vorbestimmten Zeitraum gespeichert werden können.
Im Folgenden soll das Verfahren zum Betreiben eines Motoren- oder Antriebsstrangprüfstands 2 beschrieben werden.
In einem ersten Verfahrensschritt werden mittels der Drucksensoren 6, des Winkelsensors 7a und des Drehzahlsensors 7b ein Brennraumdruck in einem oder mehreren Brennräumen 4, ein Kurbelwinkel an der Kurbelwelle 5 und eine Motordrehzahl des Verbrennungsmotors 3 zeitgleich erfasst.
Der gemessene Brennraumdruck, der entsprechende Kurbelwinkel und die dazu gehörige Motordrehzahl werden dann zur weiteren Verarbeitung an das Echtzeitsystem 14 und dort an die Signalverarbeitung 21 auf dem Echtzeitrechner 16 übermittelt. Sowohl die Erfassung der Messwerte als auch deren Übermittlung an den Echtzeitrechner 16 erfolgen möglichst totzeitfrei und mit einer hohen Datenrate.
Unter Verwendung des gemessenen Brennraumdrucks und des Kurbelwinkels wird das kurbelwinkelgenaue indizierte Motormoment des Verbrennungsmotors 3 berechnet. Bei dem indizierten Motormoment handelt es sich um das Moment, dass bei der Verbrennung von Luft-Kraftstoff-Gemisch im Brennraum 4 entsteht und an der Kurbelwelle 5 idealerweise, d. h. ohne Berücksichtigung von Reibungsverlusten anliegt. Das indizierte Motormoment wird in der Signalverarbeitung 21 durch den Echtzeitrechner 16 in Abhängigkeit der geometrischen Parameter des Kurbeltriebes berechnet.
In einem weiteren Verfahrensschritt wird basierend auf dem ermittelten indizierten Motormoment das kurbelwinkelgenaue effektive Motormoment berechnet. Das effektive Motormoment berücksichtigt im Vergleich zum indizierten Motormoment sowohl die im Verbrennungsmotor 3 auftretenden Verluste, beispielsweise Reibungsverluste, sowie die Leistungsaufnahme eventueller Nebenaggregate. Die Berechnung erfolgt in der Signalverarbeitung 21 durch den Echtzeitrechner 16 unter Verwendung eines Reibmodells zur Berücksichtigung der Motorreibung. Bei dem Reibmodell kann es sich um ein physikalisches oder ein empirisches Reibmodell handeln. Das Reibmodell ist auf dem Echtzeitrechner 16 hinterlegt. Die Leistungsaufnahme der Nebenaggregate kann ebenfalls anhand von auf dem Echtzeitrechner hinterlegten Modelle oder durch zeitgleich experimentell aus anderen Prüfstandsaufbauten ermittelt werden. Das berechnete effektive Motormoment kann dann bevorzugt mit den Messdaten des optionalen Drehmomentmessflansches 12 verglichen werden. Dies ermöglicht beispielsweise eine Verifizierung des berechneten effektiven Motormoments. Darüber hinaus ist es denkbar, basierend auf dem Vergleich eine Sicherheitsabschaltung zu realisieren. Überschreitet die Differenz zwischen dem berechneten Motormoment und den Messdaten des Drehmomentmessflansches 12 einen vorher definierten Grenzwert kann die Prüfstandsanordnung 1 beispielsweise abgeschaltet werden.
In einem weiteren Verfahrensschritt wird der Dyno 11 in Abhängigkeit des zuvor berechneten effektiven Motormoments und der gemessenen Motordrehzahl in Echtzeit geregelt. Hierzu wird von dem Echtzeitrechner 16 ein Sollwert berechnet. Dies erfolgt basierend auf dem effektiven Motormoment und unter Verwendung der im Echtzeitrechner 16 hinterlegten Modelle, als unter Verwendung des virtuellen Fahrzeugmodells 17, der virtuellen Strecke 18, auf der das Fahrzeugmodell 17 virtuell fährt und dem virtuellen Fahrermodell 19.
In Abhängigkeit des Streckenmodells 18 und des virtuellen Fahrzeugmodells 17 gibt das Fahrermodell 19 Gaspedalstellungen an das Motorsteuergerät 8 weiter, wodurch sich unterschiedliche Betriebszustände des Verbrennungsmotors 3 einstellen. Das sich daraus ergebende effektive Motormoment wird verwendet, um die in dem aktuellen Betriebspunkt des Verbrennungsmotors 3 auftretende Belastung auf die Kurbelwelle 5 zu berechnen. Das effektive Motormoment bildet die Eingangsgröße für die Simulationsmodelle 17, 18, 19 und damit für die Berechnung des Sollwerts. Der Sollwert ist ein Maß für die berechnete Belastung, die am Dyno 11 eingestellt werden soll, und mit der der Verbrennungsmotor 3 an seiner Kurbelwelle belastet wird. Bei dem Sollwert kann es sich um eine Drehzahl oder ein Lastmoment handeln, das dem Dyno 11 vorgegeben wird. Dadurch kann sowohl eine Drehzahlregelung oder eine Drehmomentregelung des Dynos 11 erfolgen.
Ist eine Drehzahlregelung des Dynos 11 vorgesehen, vergleicht der Echtzeitrechner 16 den Sollwert in einem weiteren Verfahrensschritt mit den Messdaten des Drehzahlsensors 13 am Dyno 11. Wird eine Drehmomentregelung verwendet wird beispielsweise die Leistungsaufnahme des Dynos 11 mit geeigneten Sensoren erfasst. Mithilfe bekannter Regler und Regelstrategien, die beispielsweise direkt in der Dyno-Regelung 22 auf dem Echtzeitrechner 16 hinterlegt sind, wird dann eine Stellgröße durch den Echtzeitrechner 16 generiert, die an den Dyno 11 bzw. den zugehörigen Frequenzumrichter/Leistungselektronik übergeben wird.
Die Erfassung sämtlicher Messwerte, die Berechnung des indizierten und effektiven Motormoments und die Regelung des Dynos 11 erfolgen jeweils zeitsynchron. Dadurch wird eine Regelung des Dynos 11 in Echtzeit ermöglicht.
In einem weiteren Verfahrensschritt können sämtliche Messgrößen der Sensoren 6, 7a, 7b 12, 13, das berechnete indizierte und effektive Motormoment sowie sämtliche weiteren im Echtzeitsystem enthaltenen bzw. berechnete Daten auf der Anzeige 23 visualisiert und/oder auf dem Speicher 24 gespeichert werden. Es versteht sich, dass die Anzeige und Speicherung der Messwerte auch auf einem vom Echtzeitsystem 14 getrennt angeordneten Indiziersystem erfolgen kann, das ebenfalls mit den Sensoren 6, 7a, 7b 12, 13 verbunden ist und damit ebenfalls über sämtliche Messgrößen verfügt.

## Patentansprüche

1. Verfahren zum Betreiben eines Motoren- oder Antriebsstrangprüfstands mit einem Verbrennungsmotor (3), der mindestens einen Brennraum (4) aufweist und an seiner Kurbelwelle (5) ein effektives Motormoment abgibt, und einer Antriebs- und/oder Belastungseinrichtung (10), die direkt oder über Antriebsstrangkomponenten mit der Kurbelwelle (5) verbunden ist, wobei mittels der Antriebs und/oder Belastungseinrichtung (10) die dynamischen Belastungen simuliert werden können, die beim realen Betrieb eines Fahrzeugs über die Kurbelwelle (5) auf den Verbrennungsmotor (3) wirken, **gekennzeichnet durch** die folgenden Schritte:
- zeitgleiches Erfassen eines Brennraumdrucks in einem oder mehreren Brennräumen (4) und eines Kurbelwinkels an der Kurbelwelle (5);
- Ermitteln einer Motordrehzahl;
- Berechnung des kurbelwinkelgenauen indizierten Motormoments unter Verwendung des gemessenen Brennraumdrucks und des Kurbelwinkels;
- Berechnung des kurbelwinkelgenauen effektiven Motormoments, basierend auf dem ermittelten indizierten Motormoment,
- Regelung der Antriebs- und/oder Belastungseinrichtung (10) in Abhängigkeit des zuvor berechneten effektiven Motormoments und der gemessenen Motordrehzahl; wobei der gemessene Brennraumdruck, der entsprechende Kurbelwinkel und die Motordrehzahl zur weiteren Verarbeitung an ein Echtzeitsystem (14) übermittelt werden; und wobei das indizierte Motormoment und das effektive Motormoment vom Echtzeitsystem (14) berechnet werden.

2. Verfahren nach Anspruch 1, **dadurch gekennzeichnet, dass** ein Sollwert zur Regelung der Antriebs- und/oder Belastungseinrichtung (10) basierend auf dem effektiven Motormoment und unter Verwendung eines virtuellen Fahrzeugmodells (17), einer virtuellen Strecke (18), auf der das Fahrzeugmodell (17) virtuell fährt, und einem virtuellen Fahrermodell (19) von dem Echtzeitsystem (14) berechnet wird.

3. Verfahren nach Anspruch 2, **dadurch gekennzeichnet, dass** das indizierte Motormoment, das effektive Motormoment und der Sollwert von einem einzigen Prozessor berechnet werden, der Teil des Echtzeitsystems ist.

4. Verfahren nach Anspruch 2, **dadurch gekennzeichnet, dass** die Antriebs- und/oder Belastungseinrichtung (10) vom Echtzeitsystem (14) geregelt wird, wobei die Regelung auf dem Sollwert basiert.

5. Verfahren nach Anspruch 1, **dadurch gekennzeichnet, dass** das Echtzeitsystem (14) Teil eines Prüfstandsregelsystems (15) zur Regelung der Antriebs- und/oder Belastungseinrichtung (10) ist.

6. Verfahren nach Anspruch 2, **dadurch gekennzeichnet, dass** der Sollwert zur Regelung der Antriebs- und/oder Belastungseinrichtung (10) an ein Prüfstandsregelsystem (15) übergeben wird, das die Antriebs- und/oder Belastungseinrichtung (10) regelt.

7. Verfahren nach Anspruch 2, **dadurch gekennzeichnet, dass** der Sollwert zur Regelung der Antriebs- und/oder Belastungseinrichtung (10) eine Drehzahl oder ein Lastmoment ist.

8. Verfahren nach einem der vorhergehenden Ansprüche, **dadurch gekennzeichnet, dass** die Motordrehzahl mithilfe eines Drehzahlsensors (7b) gemessen wird oder die Motodrehzahl basierend auf dem zeitlichen Verlauf der erfassten Kurbelwinkel berechnet wird.

9. Prüfstandsanordnung für dynamische Prüfaufgaben an einem Verbrennungsmotor (3) und/oder einem Antriebsstrang umfassend,
- einen Verbrennungsmotor (3) mit mindestens einem Brennraum (4) und einer Kurbelwelle (5),
- Drucksensoren (6) zum Messen von Brennraumdrücken,
- einen Winkelsensor (7a) zum Messen von Kurbelwinkeln an der Kurbelwelle (5),
- eine Antriebs- und/oder Belastungseinrichtung (10), die direkt oder über Antriebstrangkomponenten mit der Kurbelwelle (5) des Verbrennungsmotors (3) verbunden ist und mittels der dynamische Belastungen, die beim realen Betrieb eines Fahrzeug über die Kurbelwelle (5) auf den Verbrennungsmotor (3) wirken, simuliert werden können,
- ein Echtzeitsystem (14) zur Verarbeitung von Messdaten der Sensoren (6, 7a),
**dadurch gekennzeichnet,**
**dass** das Echtzeitsystem (14) einen Echtzeitrechner (16) umfasst, der ausgebildet ist, basierend auf den gemessenen Brennraumdrücken und Kurbelwinkeln ein effektives Motormoment zu berechnen, das der Verbrennungsmotor (3) an seiner Kurbelwelle (5) abgibt und,
**dass** der Echtzeitrechner (16) weiter ausgebildet ist, in Abhängigkeit des berechneten effektiven Moments einen Sollwert zu berechnen, der zur Regelung der Antriebs und/oder Belastungseinrichtung (10) verwendet wird.

10. Prüfstandsanordnung nach Anspruch 9, **dadurch gekennzeichnet, dass** auf dem Echtzeitrechner (16) ein virtuelles Fahrzeugmodell (17), ein Modell einer virtuellen Strecke (18), auf der das Fahrzeugmodell (17) virtuell fährt, und ein Modell (19) eines virtuellen Fahrers hinterlegt ist, wobei der Echtzeitrechner (16) ausgebildet ist, unter Verwendung des berechneten effektiven Moments und ermittelter Motordrehzahlen des Verbrennungsmotors (3) sowie mithilfe der Modelle (17, 18, 19) den Sollwert zur Regelung der Antriebes- und/oder Belastungseinrichtung (10) zu berechnen.

11. Prüfstandsanordnung nach Anspruch 9 oder 10, **dadurch gekennzeichnet, dass** der Echtzeitrechner (16) weiter ausgebildet ist, die Antriebs- und/oder Belastungseinrichtung (10) unter Verwendung des Sollwerts zu regeln.

12. Prüfstandsanordnung nach einem der Ansprüche 9 bis 11, **gekennzeichnet durch** ein Prüfstandsregelsystem (15) zur Regelung der Antriebs- und/oder Belastungseinrichtung (10), das den Echtzeitrechner (16) umfasst.

13. Prüfstandsanordnung nach Anspruch 9 oder 10, **gekennzeichnet durch** ein Prüfstandsregelsystem (15) zur Regelung der Antriebs- und/oder Belastungseinrichtung (10), an das ein externer Echtzeitrechner den berechneten Sollwert zur Regelung übergibt.

14. Prüfstandsanordnung nach einem der vorhergehenden Ansprüche 9 bis 13, **dadurch gekennzeichnet, dass** die Sensoren (6, 7a) am Verbrennungsmotor zur Weiterverarbeitung der Messdaten mit dem Echtzeitrechner (16) verbunden sind.

## Claims

1. Method for operating an engine or powertrain test bench with a combustion engine (3), the combustion engine (3) having at least one combustion chamber (4) and generating an effective engine torque at its crankshaft (5), and a drive and/or loading unit (10), which is connected to the crankshaft (5) either directly or via drivetrain components, wherein the dynamic loads that act upon the combustion engine (3) via the crankshaft (5) during actual operation of a vehicle can be simulated by means of the drive and/or loading unit (10),
**characterised by** the following steps:
- Simultaneous detection of a combustion chamber pressure in one or more combustion chambers (4) and of a crank angle at the crankshaft (5);
- Determination of an engine speed;
- Calculation of the crank angle resolved indicated engine output torque using the measured combustion chamber pressure and the crank angle;
- Calculation of the crank angle resolved effective engine output torque, based on the calculated indicated engine output torque,
- Controlling of the drive and/or loading unit (10) depending on the previously calculated effective engine output torque and the measured engine speed;
wherein
- the measured combustion chamber pressure, the respective crank angle and the engine speed are transmitted to a real-time system (14) for further processing;
and wherein
- the indicated engine output torque and the effective engine output torque are calculated by the real-time system (14).

2. Method according to claim 1, **characterised in that** a set value for controlling the drive and/or loading unit (10) is calculated by the real-time system (14) based on the effective engine output torque and using a virtual vehicle model (17), a virtual route model (18) for virtual test driving of the vehicle model (17), and a virtual driver model (19).

3. Method according to claim 2, **characterised in that** the indicated engine output torque, the effective engine output torque, and the set value are calculated by a single processor that is part of the real-time system.

4. Method according to claim 2, **characterised in that** the drive and/or loading unit (10) is controlled by the real-time system (14), the controlling being based on the set value.

5. Method according to claim 1, **characterised in that** the real-time system (14) is part of a test bench control system (15) for controlling the drive and/or loading unit (10).

6. Method according to claim 2, **characterised in that** the set value for controlling the drive and/or loading unit (10) is transmitted to a test bench control system (15), which controls the drive and/or loading unit (10).

7. Method according to claim 2, **characterised in that** the set value for controlling the drive and/or loading unit (10) is a rotational speed or a load torque.

8. Method according to any one of the preceding claims, **characterised in that** the engine speed is measured with a speed sensor (7b) or **in that** the engine speed is calculated on the basis of the temporal course of the detected crank angles.

9. Test bench arrangement for dynamic testing tasks of a combustion engine (3) and/or a powertrain, comprising
- a combustion engine (3) with at least one combustion chamber (4) and a crankshaft (5),
- pressure sensors (6) for measuring combustion chamber pressures,
- an angle sensor (7a) for measuring crank angles at the crankshaft (5),
- a drive and/or loading unit (10), which is connected to the crankshaft (5) of the combustion engine (3) either directly or via drivetrain components, wherein dynamic loads that act upon the combustion engine (3) via the crankshaft (5) during actual operation of a vehicle can be simulated by means of the drive and/or loading unit (10),
- a real-time system (14) for processing the data measured by the sensors (6, 7a),
**characterised in that**
- the real-time system (14) comprises a real-time computer (16), which is configured to calculate an effective engine output torque, on the basis of the measured combustion chamber pressures and crank angles, that is released by the combustion engine (3) at its crankshaft (5), and
- the real-time computer (16) is further configured to calculate a set value as a function of the calculated effective engine output torque, said set value being used to control the drive and/or loading unit (10).

10. Test bench arrangement according to claim 9, **characterised in that** a virtual vehicle model (17), a model of a virtual route (18) for virtual test driving of the vehicle model (17), and a virtual driver model (19) are implemented on the real-time computer (16), the real-time computer (16) being designed to calculate, under consideration of the calculated effective engine output torque and the determined engine speed of the combustion engine (3) as well as with the help of the models (17, 18, 19), the set value for controlling the drive and/or loading unit (10).

11. Test bench arrangement according to claim 9 or 10, **characterised in that** the real-time computer (16) is further designed to control the drive and/or loading unit (10), using the set value for this purpose.

12. Test bench arrangement according to one of the claims 9 to 11, **characterised by** a test bench control system (15) for controlling the drive and/or loading unit (10), said test bench control system (15) comprising the real-time computer (16).

13. Test bench arrangement according to claim 9 or 10, **characterised by** a test bench control system (15) for controlling the drive and/or loading unit (10), wherein an external real-time computer transmits the calculated set value to said test bench control system (15) for controlling.

14. Test bench arrangement according to any one of the preceding claims 9 to 13, **characterised in that** the sensors (6, 7a) at the combustion engine are connected to the real-time computer (16) for further processing of the measured data.

## Revendications

1. Procédé d'exploitation d'un banc d'essai de moteur ou de groupe moteur avec un moteur à combustion interne (3), qui présente au moins une chambre de combustion (4) et fournit au niveau de son vilebrequin (5) un couple moteur efficace, et avec un dispositif d'entrainement et/ou de mise en charge (10) qui est relié au vilebrequin (5) directement ou par l'intermédiaire de composants de groupe moteur, dans lequel les contraintes dynamiques qui s'exercent sur le moteur à combustion interne (3) par l'intermédiaire du vilebrequin (5) lors d'un fonctionnement en conditions réelles d'un véhicule peuvent être simulées au moyen du dispositif d'entrainement et/ou de mise en charge (10),
**caractérisé par** les étapes suivantes :
- enregistrement simultané d'une pression de chambre de combustion dans une ou plusieurs chambre(s) de combustion (4) et d'un angle de vilebrequin au niveau du vilebrequin (5) ;
- détermination d'un régime moteur ;
- calcul du couple moteur indexé en fonction de l'angle de vilebrequin avec utilisation de la pression de chambre de combustion mesurée et de l'angle de vilebrequin ;
- calcul du couple moteur efficace en fonction de l'angle de vilebrequin, en se basant sur le couple moteur indexé déterminé,
- régulation du dispositif d'entrainement et/ou de mise en charge (10) en fonction du couple moteur efficace calculé précédemment et du régime de moteur mesuré ;
dans lequel la pression de chambre de combustion mesurée, l'angle de vilebrequin correspondant et le régime moteur sont transmis à un système en temps réel (14) en vue d'un traitement ultérieur ;
et dans lequel le couple moteur indexé et le couple moteur efficace sont calculés par le système en temps réel (14).

2. Procédé selon la revendication 1, **caractérisé en ce qu'**une valeur de consigne destinée à une régulation du dispositif d'entrainement et/ou de mise en charge (10) est calculée par le système en temps réel (14) en se basant sur le couple moteur efficace et en utilisant un modèle de véhicule virtuel (17), une route virtuelle (18) sur laquelle le modèle de véhicule (17) se déplace de manière virtuelle, et un modèle de conducteur virtuel (19).

3. Procédé selon la revendication 2, **caractérisé en ce que** le couple moteur indexé, le couple moteur efficace et la valeur de consigne sont calculés par un processeur unique qui fait partie du système en temps réel.

4. Procédé selon la revendication 2, **caractérisé en ce que** le dispositif d'entrainement et/ou de mise en charge (10) est régulé par le système en temps réel (14), dans lequel la régulation est basée sur la valeur de consigne.

5. Procédé selon la revendication 1, **caractérisé en ce que** le système en temps réel (14) fait partie d'un système de régulation de banc d'essai (15) destiné à une régulation du dispositif d'entrainement et/ou de mise en charge (10).

6. Procédé selon la revendication 2, **caractérisé en ce que** la valeur de consigne destinée à une régulation du dispositif d'entrainement et/ou de mise en charge (10) est transmise à un système de régulation de banc d'essai (15) qui régule le dispositif d'entrainement et/ou de mise en charge (10).

7. Procédé selon la revendication 2, **caractérisé en ce que** la valeur de consigne destinée à une régulation du dispositif d'entrainement et/ou de mise en charge (10) est une vitesse de rotation ou un moment de charge.

8. Procédé selon l'une quelconque des revendications précédentes, **caractérisé en ce que** le régime moteur est mesuré à l'aide d'un capteur de vitesse de rotation (7b) ou le régime moteur est calculé en se basant sur l'évolution dans le temps de l'angle de vilebrequin enregistré.

9. Agencement de banc d'essai pour des procédures de contrôle dynamique sur un moteur à combustion interne (3) et/ou un groupe moteur, comprenant,
- un moteur à combustion interne (3) avec au moins une chambre de combustion (4) et un vilebrequin (5),
- des capteurs de pression (6) destinés à mesurer des compressions de chambre de combustion,
- un capteur angulaire (7a) destiné à mesurer des angles de vilebrequin au niveau du vilebrequin (5),
- un dispositif d'entrainement et/ou de mise en charge (10) qui est relié au vilebrequin (5) du moteur à combustion interne (3) directement ou par l'intermédiaire de composants de groupe moteur et au moyen duquel des contraintes dynamiques qui s'exercent sur le moteur à combustion interne (3) par l'intermédiaire du vilebrequin (5) lors d'un fonctionnement en conditions réelles d'un véhicule peuvent être simulées,
- un système en temps réel (14) destiné au traitement des données de mesure des capteurs (6, 7a),
**caractérisé en ce que**,
le système en temps réel (14) comprend un calculateur en temps réel (16) qui est conçu pour calculer un couple moteur efficace fourni par le moteur à combustion interne (3) au niveau de son vilebrequin (5), en se basant sur les compressions de chambre de combustion et les angles de vilebrequin mesurés, et
le calculateur en temps réel (16) est en outre conçu pour calculer, en fonction du couple efficace calculé, une valeur de consigne qui est utilisée en vue d'une régulation du dispositif d'entrainement et/ou de mise en charge (10).

10. Agencement de banc d'essai selon la revendication 9, **caractérisé en ce qu'**un modèle de véhicule virtuel (17), un modèle d'une route virtuelle (18) sur laquelle circule de manière virtuelle le modèle de véhicule (17), et un modèle (19) d'un conducteur virtuel est/sont fourni(s) au calculateur en temps réel (16), dans lequel le calculateur en temps réel (16) est conçu pour calculer la valeur de consigne destinée à une régulation du dispositif d'entrainement et/ou de mise en charge (10) en utilisant le couple efficace calculé et des régimes moteur déterminés du moteur à combustion interne (3) ainsi qu'à l'aide des modèles (17, 18, 19).

11. Agencement de banc d'essai selon la revendication 9 ou 10, **caractérisé en ce que** le calculateur en temps réel (16) est en outre conçu pour réguler le dispositif d'entrainement et/ou de mise en charge (10) en utilisant la valeur de consigne.

12. Agencement de banc d'essai selon l'une quelconque des revendications 9 à 11, **caractérisé par** un système de régulation de banc d'essai (15) destiné à une régulation du dispositif d'entrainement et/ou de mise en charge (10) qui comprend le calculateur en temps réel (16).

13. Agencement de banc d'essai selon la revendication 9 ou 10, **caractérisé par** un système de régulation de banc d'essai (15) destiné à une régulation du dispositif d'entrainement et/ou de mise en charge (10) auquel un calculateur en temps réel externe transmet la valeur de consigne calculée en vue d'une régulation.

14. Agencement de banc d'essai selon l'une quelconque des revendications 9 à 13, **caractérisé en ce que** les capteurs (6, 7a) présents au niveau du moteur à combustion interne sont reliés au calculateur en temps réel (16) en vue d'un traitement supplémentaire des données de mesure.
